# EUROPEAN PATENT APPLICATION

(11) **EP 1 046 522 A2**
(43) Date of publication of application: **25.10.2000**
(21) Application number: 00200784.7
(22) Date of filing: 06.03.2000
(51) Int. Cl.: B60G 21/06, B60G 11/16

(54) **Hydraulic suspension assembly for motor vehicles**

(30) Priority: 23.04.1999 IT MI990853
(71) Applicant: Monti, Claudio, 20020 Misinto, Milano (IT)
(72) Inventor: Monti, Claudio, 20020 Misinto, Milano (IT)
(74) Representative: Riccardi, Sergio

(57) **Abstract**

A hydraulic suspension assembly for motor vehicles is disclosed, comprising for each suspension opposing elastic means (12,13) operatively connected to the vehicle frame and to one wheel, wherein each suspension is connected through hydraulic ducts (14,15,16) to the other suspensions of the vehicle in such a way that the reactions of said elastic means of each one suspension are fed back to the suspensions connected to said one suspension.

## Description

The present invention relates to a hydraulic suspension assembly for motor vehicles.

For the position of a vehicle the response of the suspensions to the forces acting on the travelling vehicle is particularly critical. More particularly, the vertical forces due to ground roughness, the centrifugal force when taking a bend, the inertial forces when speeding up or slowing down and the aerodynamic forces at high speed may lead to lose stability and consequently control of the vehicle.

In order to meet adequately the technical problems concerning control and dynamic stability of the vehicle, many types of suspensions have been developed, trying to optimize the vehicle response to the above mentioned forces.

Thus for example suspensions working with a compression spring are known. More particularly there are suspensions provided with conventional or double acting shock absorbers, having valves regulating the flow of a fluid such as oil both in the compression and the expansion phase, with or without a gas cushion separated by a floating piston; suspensions provided with double acting gas absorbers coupled to an electronic position adjustment system; and suspensions with supplemental means for position adjustment having one or more pumps and hydraulic active and passive actuators.

For special applications such as racing suspensions there are suspensions with opposing springs, where one spring works in the compression phase and the other in the extension phase, so that the vehicle roll around its longitudinal axis for instance when taking a bend, is reduced and lowering of the centre of gravity is also obtained.

Although these known suspension assemblies solve the mentioned technical problem, they are nonetheless afflicted by some drawbacks.

Suspension that are not provided or connected with active or passive position control systems, allow an excessive roll when taking a bend so as to cause discomfort to passengers.

Additionally loads are not distributed in an optimized way on the wheels, causing their irregular and inconsistent wear.

Moreover the suspensions of this kind show a reaction delay causing driving troubles and obliging the driver to a harder control of the vehicle.

The suspensions connected with active or passive position control systems are considerably complicated, thus involving high manufacturing and maintenance costs that are justified only for vehicles of higher class.

The object of the present invention is to overcome the drawbacks pertaining to the state of the art suspensions.

Thus the present invention concerns a hydraulic suspension assembly for motor vehicles which is simple to be manufactured with reduced costs and allows for any movement of the vehicle an immediate response to the forces acting on it, a high dynamic stability and therefore a high travelling comfort for both the driver and the passengers.

In few words the present invention concerns a hydraulic suspension assembly for motor vehicles comprising at each suspension opposing elastic means operatively connected to the vehicle frame and to one wheel, wherein each suspension is connected by hydraulic ducts to the other suspensions of the vehicle so that the reactions of said elastic means of each suspension are fed back to the suspensions connected thereto.

The hydraulic suspension assembly for motor vehicles according to the invention is characterized by the features recited in Claim 1.

Further advantageous features of the suspension assembly are indicated in the dependent claims.

Further details, advantages and features of the hydraulic suspension assembly for motor vehicles according to the invention, will be more apparent upon reading the following detailed description having reference to the accompanying drawings in which a preferred embodiment is shown as an illustrative but non limiting example.

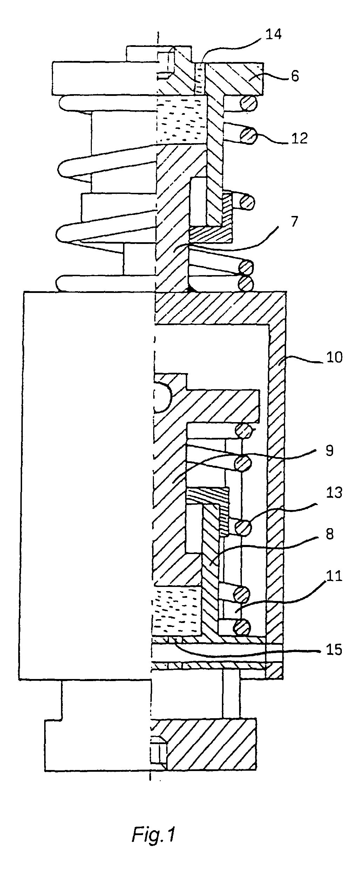

Figure 1 is a vertical partially sectional view of a suspension being part of the subject assembly.
Figure 2 is a diagrammatic view of the assembly of the invention, showing the hydraulic connections of the suspensions.

With reference to said drawings, the hydraulic suspension assembly 1 of the invention preferably comprises four suspensions 2, 3, 4, 5 connected to one another by hydraulic ducts or tubes 16 in a way that will be described hereinafter.

Each suspension generally comprises an upper hydraulic cylinder 6 in which a piston 7 connected to said cylinder can freely move, the rod of said piston protruding from the bottom part of said cylinder 6. The top part of each cylinder 6 is then fixed to the vehicle frame not shown in the drawings.

A lower hydraulic cylinder 8 is arranged under the upper cylinder 6 in an opposite way thereto, so that the rod of its piston 9 protrudes upwardly when assembled.

An upper support 10 connects the lower cylinder 8 to the rod of piston 7 of the upper cylinder 6 so that they are fixedly connected to each other, while a lower support 11 connects the rod of piston 9 of the lower cylinder 8 to the hub of the vehicle wheel not shown in the drawings.

Two springs 12, 13 are mounted on each assembled suspension. More particularly, spring 12 connects cylinder 6 to the rod of its piston 7 and works only in traction during the extension motion of piston 7 from cylinder 6, while spring 13 connects cylinder 8 to the rod of its piston 9 and also works always in traction.

Preferably the diameters of cylinders 6 and 8 are of the same size and springs 12, 13 have similar elastic characteristics.

At the bottom of each hydraulic cylinder 6 and 8, namely at the upper and the lower end of each suspension, two tapped bores are made, more particularly two tapped bores 14 at the bottom of cylinder 6 and two tapped bores 15 at the bottom of cylinder 8.

These bores have the purpose of threadedly connecting tubes 16 for the hydraulic connection of suspensions 2, 3, 4, 5 of assembly 1 according to the invention.

More particularly two tubes 16 start from each upper cylinder 6 of suspensions 2, 3, 4, 5 and are connected to the lower cylinders 8 of the suspensions arranged on the opposite side of the motor vehicle.

With this system, as the inner space of the cylinders 6 and 8 is defined by the stroke of the corresponding pistons 7 and 8, said space being always filled with fluid, and as each cylinder 6, 8 is connected with springs 12, 13 and cylinders 6, 8 of the other suspensions through said hydraulic ducts or tubes 16 as described hereinbefore, said assembly 1 according to the invention consists of a plurality of suspensions each provided with opposing elastic means, namely opposing cylinders and springs that through the above mentioned hydraulic connection are able to mutually exchange their reactions to the external stresses in an almost momentary way, thus improving position and control of the vehicle, as better described below.

When the motor vehicle is at a standstill, its mass urges on the cylinders 6 of suspensions 2, 3, 4, 5, generating a pressure which is transmitted to the pistons 7 and through support 10 is discharged on springs 13 connected with cylinders 8. The same pressure is then transmitted through the tubes 16 to all the cylinders 8 of said suspensions 2, 3, 4, 5 which are thus urged all at the same level and put springs 13 under traction. The result is a floating effect of the vehicle under the combined action of all the cylinders 6 and 8.

When travelling different situations may occur according to the motion and the road conditions.

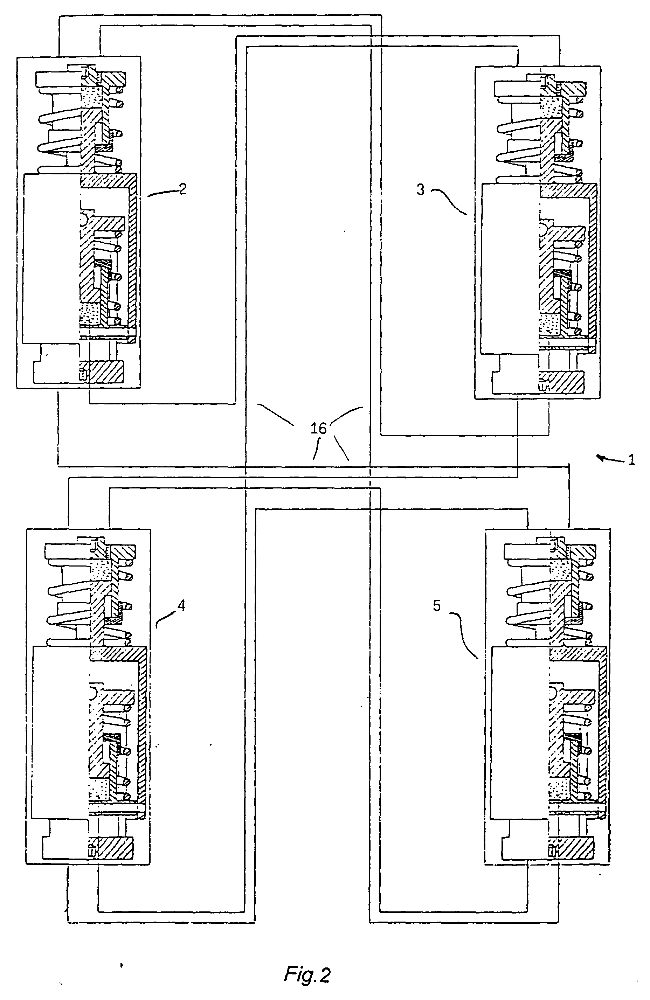

More particularly when taking a bend, in view of the centrifugal force the suspensions of the outer side of the bend undergo a greater load than those of the inner side of the bend. Consequently in the cylinders 6 of the outer suspensions, for instance suspensions 3 and 5 with reference to Figure 2, an overpressure is generated, which acts on the corresponding pistons 7, and through support 10 and cylinder 8 is transmitted to the corresponding springs 13 that undergo a further traction, lowering the motor vehicle on the outer side of the bend.

In this way a vacuum is generated in the cylinders 8 of the same suspensions 3, 5, thus causing hydraulic fluid such as oil to return from cylinders 6 of suspensions 2, 4 of the inner side of the bend. Therefore lowering will occur also on the inner side of the vehicle.

Through tubes 16 the overpressure generated in cylinders 6 in view of the centrifugal force is transmitted also to cylinders 8 of suspensions 2 and 4 of the inner side, so that their springs 13 undergo the same deformations of the corresponding springs 13 of the suspensions 3 and 5 on the outer side of the bend.

Therefore a change of position of suspensions 2, 3, 4 5, during the bending motion of the vehicle is obtained by assembly 1 of the invention, with a resulting lowering of the vehicle and of its centre of gravity, said lowering being of the same quantity both at the outer and the inner side of the bend.

When braking the vehicle, the inertial forces are causing a greater load on the suspensions of the front side of the vehicle, for instance the suspensions 2 and 3, referring again to Figure 2. In their cylinders 6 an overpressure is generated and transmitted in the same way as hereinbefore explained, to springs 13 of all the four suspensions of the vehicle, namely directly to springs 13 of suspensions 2 and 3 and indirectly through the tubes 16 to springs 13 of suspensions 4 and 5.

Also in this case there will be a change of position causing the lowering of the vehicle and in turn of the centre of gravity as above described, with consequent better stability.

Clearly the same situation will occur when speeding up, with the only difference that the overpressure will be initially generated in cylinders 6 of the rear suspensions 4 and 5.

In case of rough ground, the wheel receiving a thrust because of a protrusion of the soil, tends to lift putting the spring 13 of the suspension connected to said wheel under traction. Thus a pressure change is generated in cylinders 6 and 8 of said suspension and through tubes 16 is transmitted to cylinders 6 and 8 of all the other suspensions of the vehicle with consequent deformation of springs 12 and 13 cancelling their effects. The position of the vehicle therefore is not modified by any roughness of the soil.

In case of depressions on the road surface the same operation will take place but in this case it will start with a pressure change generated in cylinders 6 and 8 of the relevant suspension.

Thus it should be noted that assembly 1 of the invention attains loads evenly distributed on the suspensions in any travelling condition, allowing a high comfort of driver and passengers by preventing any rolling and pitching effect and lowering the centre of gravity. The motor vehicle is accordingly more stable and easier to be controlled, and the optimal distribution of loads allows to obtain a reduced wear of tires and performances of high level of the vehicle.

Finally the simple construction of the assembly components and more particularly of the hydraulic connections thereof, without the need of pumps, actuators, reservoirs and so on, make the assembly of the present invention attractive for use also on motor vehicles of lower class and price.

It is to be understood that many modifications, adaptations, additions, variations and substitutions may be resorted to the embodiment hereinbefore described as an illustrative non limiting example, without departing however from the scope of the invention as defined in the appended claims.

## Claims

1. Hydraulic suspension assembly for motor vehicles wherein each suspension (2, 3, 4, 5) comprises opposing elastic means operatively connected to the vehicle frame and to one wheel, characterized in that each one suspension (2, 3, 4, 5) is connected by hydraulic ducts (16) to the other suspensions of the vehicle so that the reactions of the elastic means of each suspension (2, 3, 4, 5) are fed back to the other suspensions connected to said one suspension.

2. Hydraulic suspension assembly for motor vehicles according to Claim 1, characterized in that said elastic means comprise a pair of opposing pistons (7, 9) moving in a corresponding pair of upper (6) and lower (8) cylinders, said cylinders (6, 8) being also oppositely arranged and operatively connected to one another, each of said cylinders (6, 8) being provided with a spring (12, 13) connecting the cylinder to the rod of its piston (7, 9), the inner space of each cylinder (6, 8) being defined by the stroke of its piston (7, 9) and being always filled with hydraulic fluid.

3. Hydraulic suspension assembly for motor vehicles according to Claim 2, characterized in that the top part of the upper cylinder (6) is connected to the vehicle frame.

4. Hydraulic suspension assembly for motor vehicles according to Claim 2, characterized in that an upper support (10) connects said lower cylinder (8) to the rod of the piston (7) of the upper cylinder (6) so as to cause said cylinders (6, 8) to be fixedly connected.

5. Hydraulic suspension assembly for motor vehicles according to Claim 2, characterized in that a lower support (11) connects the rod of piston (9) of the lower cylinder (8) to the hub of the corresponding wheel.

6. Hydraulic suspension assembly for motor vehicles according to Claim 2, characterized in that on the bottom of each of said cylinders (6, 8) there are two tapped bores (14, 15), said bores being threadedly connected to said hydraulic ducts (16) which are totally filled with hydraulic fluid.

7. Hydraulic suspension assembly for motor vehicles according to Claim 2, characterized in that said cylinders (6, 8) have the same diameter and said springs (12,13) have the same elastic characteristics.

8. Hydraulic suspension assembly for motor vehicles according to Claim 1, characterized in that each suspension (2, 3, 4, 5) is connected through said hydraulic ducts (16) to the suspensions of the opposite side of the vehicle.

9. Hydraulic suspension assembly for motor vehicles according to Claim 2 and 8, characterized in that each upper cylinder (6) of each suspension (2, 3, 4, 5) of the vehicle is connected by a pair of hydraulic ducts (16) to the lower cylinders (8) of the suspensions of the opposite side of the vehicle.
